Europäisches Patentamt

European Patent Office

Office européen des brevets

(11) Publication number: **0 389 062**
**A1**

## (12) EUROPEAN PATENT APPLICATION

(21) Application number: **90200673.3**

(22) Date of filing: **21.03.90**

(51) Int. Cl.5: **H04J 14/02**

(30) Priority: **22.03.89 NL 8900707**

(43) Date of publication of application:
**26.09.90 Bulletin 90/39**

(84) Designated Contracting States:
**AT BE CH DE DK ES FR GB GR IT LI LU NL SE**

(71) Applicant: **Koninklijke PTT Nederland N.V.**
**P.O. Box 95321**
**NL-2509 CH The Hague(NL)**

(72) Inventor: **Tan, Han Hiong**
**Wagnerstraat 2**
**NL-2651 VD Berkel En Rodenrijs(NL)**

(54) **Communication system, comprising a central station and a number of decentralised stations connected to that central station via an optical transmission network.**

(57) The invention relates to a communication system, comprising a central station and a number of decentralised stations connected to that central station via an optical transmission network, signals to be transmitted on the side of the central station, respectively on the side of the decentralised stations being converted out of the electrical domain into the optical domain, and optical signals to be received being converted out of the optical domain into the electrical domain, and moreover signals to be transmitted on the side of the central station, respectively on the side of the decentralised stations being multiplexed and signals to be received being demultiplexed, which optical transmission network comprises long-distance conductors and local conductors, more local conductors being connected to such a long-distance conductor by means of passive couplers and the decentralised stations being connected to the respective opposite ends of those local conductors.

Characterising is that said signals to be transmitted respectively to be received are multiplexed in the frequency domain (FDM).

FIG. 1

## Communication system, comprising a central station and a number of decentralised stations connected to that central station via an optical transmission network.

### A. Background of the invention

#### 1. Field of the invention

The invention relates to a communication system, comprising a central station and a number of decentralised stations connected to that central station via an optical transmission network, signals to be transmitted on the side of the central station, respectively on the side of the decentralised stations being converted out of the electrical domain into the optical domain, and optical signals to be received being converted out of the optical domain into the electrical domain, and moreover signals to be transmitted on the side of the central station, respectively on the side of the decentralised stations being multiplexed and signals to be received being demultiplexed, which optical transmission network comprises long-distance conductors and local conductors, more local conductors being connected to such a long-distance conductor by means of passive couplers and the decentralised stations being connected to the respective opposite ends of those local conductors.

#### 2. State of the art

A communication system of the aforesaid type is known from an international patent application bearing the publication number WO 88/05233, in the name of BRITISH TELECOM, which patent application discloses a communication system as indicated hereinbefore, in which the connections between a central station (telecommunication exchange) and decentralised stations (subscribers) connected to it are - at least substantially - formed by optical conductors (glass fibres) and, consequently, the transmission of signals will take place in the optical domain. The distance between the exchange and the subscribers is mainly bridged by - as mentioned hereinabove - long-distance conductors, which locally, id est in the environment of groups of subscribers, end in a multiple optical coupler (split point), to which other side local glass fibres are connected which ensure the further connection to the subscribers.

Because of the fact that in the exchange and with the subscribers the processing of signals takes place in the electrical domain, conversion of the signals to be exchanged via the optical transmission network will occur there, to wit conversion from the electrical domain to the optical domain of the signals to be transmitted and conversion from the optical domain to the electrical domain of the signals to be received.

As the transmission network comprises fewer glass fibres than the number of subscribers, a multiplexing of the signals to be transmitted and a demultiplexing of the signals to be received will take place.

According to the state of the art appearing from the aforesaid patent application, said multiplexing and demultiplexing take place by means of TDM, in other words, in the time domain. Particularly the multiplexing of signals from the subscribers to the exchange in the time domain presents difficulties with regard to the timing of the signals necessary for an efficient use of TDM, which difficulties are due to differences in signal delay times caused by the different distances between the subscribers and the coupler respectively the exchange, and are, according to the state of the art, solved by the introduction of (initial and periodical) delay time measuring and corrective delay time retarding measures. A further drawback of the use of TDM is that also the equipment on the subscriber side has to be rather complex and consequently expensive, and has to ensure inter alia a precise synchronization.

### B. Summary of the invention

The present invention provides a communication system, as mentioned under A1, in which said drawbacks are obviated.

1. Characterising of the communication system according to the invention is that said signals, which are to be transmitted respectively to be received, are multiplexed in the frequency domain (FDM). In other words, according to the invention frequency multiplexing (FDM) instead of time multiplexing (TDM) is made use of. Frequency multiplexing implies that signals to be exchanged via a transmission medium are modulated (FM or AM) on carriers with different frequencies, that said modulated signals are transmitted together via the transmission medium, and that said signals are regained at the receiving end by successively detection or discrimination of the carrier frequency and by demodulation.

By making use of FDM instead of TDM according to the invention various advantages will be achieved, particularly with regard to the subscriber equipment, for which it is important that this equipment is simple, small and inexpensive, and moreover reliable:

■ In the first place at the subscriber side use can be made of frequency discrimination instead of time slot discrimination for the reception of signals transmitted by the exchange. This frequency discrimination can simply take place by means of extremely inexpensive components of the mass consumption electronics (portable radio-receivers).

■ In the second place the fact that the delay times are unequal does not form any problem, due to which additional measures to obviate such a problem can be omitted.

■ In the third place the communication system according to the invention offers the advantage that the subscriber equipment need not be suitable for such a high bit frequency (bit rate) as the TDM-equipment in the known communication system.

2. With regard to the transmission of signals from the central station to the decentralised station, a further elaboration of the invention is characterised in that the signals to be transmitted from the central station to a decentralised station are modulated on a first carrier with a frequency which is specific to that decentralised station. With this form of frequency multiplexing, in which the carrier frequency with which a signal is transmitted is characteristic of the receiver (destination) in question of that signal, it is achieved that only that receiver in question, the decentralised station which is tuned to that carrier frequency, will receive said signal. So in this case the carrier frequency characterises the aim, the destination of the signal to be transmitted. Consequently, sig nals meant for various decentralised stations are modulated on carriers with different frequencies characterising those stations.

3. With regard to the transmission of signals from a decentralised station to the central station a further elaboration of the invention is characterised in that the signals to be transmitted from a decentralised station to the central station are modulated on a second carrier with a frequency which is specific to that decentralised station. With this form of frequency multiplexing in which the carrier frequency with which a signal is transmitted is characteristic of the transmitter (source) of the signal, it is achieved that the receiver, the central station, can determine by means of detection or discrimination of the carrier frequency from which transmitter, which decentralised station, a signal is coming. So in this case the carrier frequency characterises the transmitter, the source of the transmitted signal. Consequently, signals received from various decentralised stations are modulated on carriers with different frequencies characterising those stations.

4. In order to avoid a mutual influencing of the former signal transmission from the central station to the relevant decentralised station and of the latter signal transmission from the relevant decentralised station to the central station, a preferred embodiment of the invention is characterised in that the frequency of said first carrier differs from the frequency of said second carrier. So the application of this measure results in that two characteristic carrier frequencies: one for the transmission and one for the reception, are allocated to each decentralised station.

5. According to an embodiment of the invention a central station for the present communication system comprises a number of modulators, each for modulating a signal, supplied to it and intended for a certain decentralised station, on a carrier, the frequency of which corresponds to the characteristic frequency of that decentralised station, and for delivering a signal thus modulated, and an adding device for adding to one another the signals delivered by said modulators.

6. According to an embodiment of the invention a central station for the present communication system further comprises a number of let- through devices, each for only letting through a signal coming from a certain decentralised station, and each with a let-through frequency corresponding to the characteristic frequency of that decentralised station.

7. According to an embodiment of the invention a decentralised station for the present communication system comprises a modulator for modulating a signal intended for the central station on a carrier with a frequency characteristic of that decentralised station, and for delivering a signal thus modulated.

8. According to an embodiment of the invention a decentralised station for the present communication system further comprises a let-through device for only letting through a signal intended for that decentralised station and with a let-through frequency characteristic of that decentralised station.

## C. References

WO88/05233, in the name of BRITISH TELECOM

## D. Embodiments

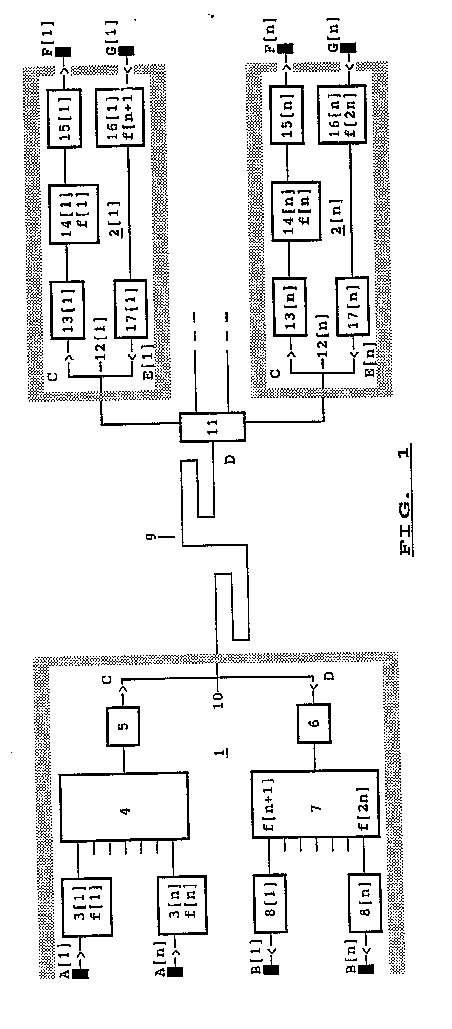

Figure 1 shows an embodiment of the invention. In this figure a central station 1 (exchange) as well as two decentralised stations 2[1] and 2[n] (subscriber stations) are shown.

The transmitting end of the exchange 1 is provided with modulators 3[1...n] with respectively modulation frequencies F[1...n], in which signals A-[1...n] to be transmitted to the subscriber stations 2[1...n] are modulated with receiving frequencies f-[1...n] characteristic of these subscriber stations. The signals thus modulated are multiplexed in an adding device 4, which delivers the multiplexed signal to an E/O-converter 5 (a laser), in which this signal is converted into an optical signal C to be transmitted.

The transmitted optical signal C and the received optical signal D are transmitted via one and the same optical transmission fibre 9 and are supplied to it respectively derived from it by means of an optical fork 10.

Near the subscriber station 2[1...n] there is a passive optical distributor 11, the working of which is described inter alia in the above-mentioned reference, and which ensures, on the one hand, that the signal C transmitted by the exchange 1 is presented to all the subscriber stations 2[1...n] and, on the other hand, that the signals to be transmitted to the exchange by the subscriber stations 2-[1...n] are collected.

The signal C presented via the distributor 11 to a subscriber station 2[1...n] is supplied there via an optical fork 12[1...n] to an O/E-converter 13[1...n], where the optical signal C is converted into an electric signal. This (multiplexed and modulated) signal is subsequently presented to a filter 14[1...n] with a let-through frequency f[1...n], which is characteristic of that subscriber station: consequently, the let-through frequency for station 2[1] is equal to f[1], the one of station 2[2] equal to f[2], and so forth, with which it is achieved that station 2[1] only lets through the signal modulated on a carrier with a frequency f[1] and meant for it, station 2[2] only the signal modulated on a carrier with a frequency f[2], and so forth. So in this way a selective demultiplexing of the multiplexed signal presented takes place. The signal thus demultiplexed is subsequently presented to a demodulator 15[1...n], where it is demodulated into a signal F[1...n], which signal corresponds to the electric signal A[1...n] presented in the exchange, id est F[1] corresponds to A[1], F[2] to A[2], and so forth.

An electric signal G[1...n] presented to a subscriber station 2[1...n] is supplied to a modulator 16[1...n], where it is modulated with a frequency f[(n+1)...2n] characteristic of that station, id est a signal presented to a station 2(1) is modulated on a carrier with a frequency f[n+1], a signal presented to a station 2(2) on a carrier with a frequency f[n+2], and so forth. The signal thus modulated is supplied to an E/O-converter 17(1...n], where the modulated signal is converted into an optical signal E[1...n], which is subsequently supplied to the passive optical distributor 11 via the optical fork 12-[1...n]. The distributor 11 collects the optical signals presented by the various subscriber stations and multiplexes them, because of the fact that the carrier frequencies of these optical signals are different. The optical signal D thus multiplexed is presented via the optical fork 10 to the receiving end of the central station 1.

The receiving end of the central station 1 is provided with an O/E-converter 6, in which a received optical signal D is converted into an electric signal, which is supplied to a multiple filter 7, consisting of individual filters the let-through frequencies of which correspond to the characteristic transmission frequencies f[(n+1)...2n] of the various subscriber stations 2[1...n]. So for each individual filter only the signal of one subscriber station, to wit of the station of which the transmission frequency corresponds to the let-through frequency of that filter, is let through. Owing to this discrimination to received carrier frequencies, the multiple filter 7 demultiplexes the (multiplexed) signal coming from the subscriber stations. The output terminals of the individual filters are each connected to a demodulator 8[1...n], where the relevant (modulated) signal is demodulated and the modulated signal B[1..n] is delivered for further routing. The signal B[1...n] corresponds to the signal G-[1...n], id est B[1] corresponds to G[1], B[2] to G-[2], and so forth.

In the present embodiment the multiplexing in the central station 1 of the various signals A[1...n] (after modulation) takes place in the electrical domain, to wit in the adding device 4, so prior to a conversion to the optical domain in the E/O-converter 5. On the side of the subscriber stations the multiplexing of the signals coming from the various subscriber stations 2[1...n] on the other hand takes place in the optical domain, to wit in the optical distributor 11. It would also be feasible to multiplex in the exchange 1 in the optical domain, for example by means of a passive optical distributor such as 11, this would, however, require a larger number of E/O converters. Likewise it would be feasible to multiplex the various signals coming from the subscriber stations in the electrical doamin, for example by an adding device such as 4; the connections between the various subscriber stations and that adding device, however, would have to be electric, and the adding device has moreover to be provided with an electric power supply.

In the present embodiment the signals are transmitted from the central station 1 to the decentralised stations 2[1...n] and from the decentralised stations 2[1...n] to the central station 1 via one and the same optical transmission fibre 9. For this purpose it is also feasible to use two optical transmission fibres, one for the transmission of signals from the central station 1 to the decentralised stations 2[1...n], via a first passive optical distributor, the output terminals of which are directly - so not by means of an optical fork -connected to the input terminals of the various decentralised stations 2-[1...n], and a second transmission fibre for the transmission of signals from the decentralised stations 2[1...n] - the output terminals of which are connected to a second optical distributor without the intermediary of an optical fork - to the central station 1. The optical fork 10 can then also be omitted on the side of the central station 1. The advantage of the use of two transmission fibres instead of one is a smaller attenuation, the disadvantage is that twice as much transmission fibre is needed.

## Claims

1. A communication system, comprising a central station and a number of decentralised stations connected to that central station via an optical transmission network, signals to be transmitted on the side of the central station, respectively on the side of the decentralised stations being converted out of the electrical domain into the optical domain, and optical signals to be received being converted out of the optical domain into the electrical domain, and moreover signals to be transmitted on the side of the central station, respectively on the side of the decentralised stations being multiplexed and signals to be received being demultiplexed, which optical transmission network comprises long-distance conductors and local conductors, more local conductors being connected to such a long-distance conductor by means of passive couplers and the decentralised stations being connected to the respective opposite ends of those local conductors, characterised in that said signals to be transmitted respectively to be received are multiplexed in the frequency domain (FDM).

2. A communication system in accordance with claim 1, characterised in that the signals to be transmitted from the central station (1) to a decentralised station (2[1...n])are modulated on a first carrier with a frequency (f[1...n]) which is specific to that decentralised station.

3. A communication system in accordance with claim 1, characterised in that the signals to be transmitted from a decentralised station to the central station are modulated on a second carrier with a frequency (f[n + 1...2n]) which is specific to that decentralised station.

4. A communication system in accordance with claims 2 and 3, characterised in that the frequency of said first carrier differs from the frequency of said second carrier.

5. A central station for the communication system in accordance with claims 2 and 3 or in accordance with claim 4, characterised by a number of modulators (3[1...n]), each for modulating a signal, supplied to it and intended for a certain decentralised station, on a carrier, the frequency (f[1...n]) of which corresponds to the characteristic frequency of that decentralised station, and for delivering a signal thus modulated, and by an adding device (4) for adding to one another the signals delivered by said modulators.

6. A central station for the communication system in accordance with claims 2 and 3 or in accordance with claim 4, characterised by a number of let-through devices (7), each for only letting through a signal coming from a certain decentralised station, and each with a let-through frequency (f[n + 1...2n]) corresponding to the characteristic frequency of that decentralised station.

7. A decentralised station for the communication system in accordance with claims 2 and 3 or in accordance with claim 4, characterised by

a modulator (16[1...n]) for modulating a signal intended for the central station on a carrier with a frequency (f[n + 1...2n]) characteristic of that decentralised station, and for delivering a signal thus modulated.

8. A decentralised station for the communication system in accordance with claims 2 and 3 or in accordance with claim 4, characterised by a let-through device (14[1...n])for only letting through a signal intended for that decentralised station and with a let-through frequency (f[1...n]) characteristic of that decentralised station.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PROCEEDINGS OF THE 12TH EUROPEAN CONFERENCE ON OPTICAL COMMUNICATION, Barcelona, 22nd-25th September 1986, pages 73-78; E.-J. BACHUS et al.: "Application of coherent systems in the subscriber loop" * Page 73, lines 12-14; page 74, line 36 - end of page; page 75, lines 1-10 * | 1-8 | H 04 J 14/02 |
| Y | PATENT ABSTRACTS OF JAPAN, vol. 7, no. 218 (E-200)[1363], 28th September 1983, page 134 E 200; & JP-A-58 111 449 (FUJITSU TEN K.K.) 02-07-1983 * In total * | 1-8 | |
| Y | DE-A-3 010 802 (SIEMENS) * Page 7, lines 34-37; page 8, line 21 - page 9, line 8; page 10, line 32 - page 11, line 16 * | 1-8 | |
| Y | PROCEEDINGS OF THE IEEE GLOBAL TELECOMMUNICATIONS CONFERENCE, GLOBECOM'85, New Orleans, Louisiana, 2nd - 5th December 1985, vol. 3, pages 1201-1205, IEEE, New York, US; D.B. PAYNE et al.: "Single mode optical local networks" * Page 1202, right-hand column, line 5 - page 1203, right-hand column, line 8 * | 1-8 | TECHNICAL FIELDS SEARCHED (Int. Cl.5)  H 04 J |
| A | DE-A-3 239 593 (STANDARD ELEKTRIK LORENTZ) * Page 4, lines 1-16; page 5, line 14 - page 6, line 21 * -/- | 1-8 | |

The present search report has been drawn up for all claims

| Place of search | Date of completion of the search | Examiner |
|---|---|---|
| THE HAGUE | 02-07-1990 | VAN DEN BERG,J.G.J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL OF LIGHTWAVE TECHNOLOGY, vol. 6, no. 5, May 1988, pages 686-694, IEEE, New York, US; K. NOSU et al.: "A consideration of factors affecting future coherent lightwave communication systems"<br>* Page 686, left-hand column, lines 13-19; page 690, left-hand column, line 34 - page 691, left-hand column, line 17; page 693, left-hand column, lines 1-13 * | 1-8 | |
| A | NACHRICHTENTECHNISCHE ZEITSCHRIFT N.T.Z., vol. 39, no. 7, July 1986, pages 484-489, Berlin, DE; C. BAACK: "Breitbandtechniken für das zukünftige integrierte Breitbandfernmeldenetz"<br>* Page 486, right-hand column, line 56 - page 488, left-hand column, line 31 * | 1-8 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 02-07-1990 | VAN DEN BERG, J.G.J. |

EPO FORM 1503 03.82 (P0401)